# EUROPEAN PATENT SPECIFICATION

(11) **EP 3 529 959 B1**
(45) Date of publication and mention of the grant of the patent: **22.06.2022**
(21) Application number: 16800964.5
(22) Date of filing: 23.11.2016
(51) Int. Cl.: H04L 27/26

(54) **FRAME STRUCTURE FOR IOT CLIENTS WITHIN 802.11AX**
RAHMENSTRUKTUR FÜR IOT CLIENTS IN 802.11AX
STRUCTURE DE TRAME POUR CLIENTS IOT DANS LA PLAGE DE 802.11AX

(43) Date of publication of application: 28.08.2019
(73) Proprietor: Huawei Technologies Co., Ltd., Longgang District Shenzhen, Guangdong 518129 (CN)
(72) Inventor: REDLICH, Oded, 80992 Munich (DE); SHILO, Shimon, 80992 Munich (DE); TSODIK, Genadiy, 80992 Munich (DE); BEN-ARIE, Yaron, 80992 Munich (DE); EZRI, Doron, 80992 Munich (DE)
(74) Representative: Körber, Martin Hans
(86) International application number: PCT/EP2016/078569
(87) International publication number: WO 2018/095522

(56) References cited:
- SHIMI SHILO (HUAWEI): "11ax Support for IoT ; 11-15-1134-02-00ax-11ax-support-for-iot", IEEE DRAFT; 11-15-1134-02-00AX-11AX-SUPPORT-FOR-IOT, IEEE-SA MENTOR, PISCATAWAY, NJ USA, vol. 802.11ax, no. 2, 16 September 2015 (2015-09-16), pages 1-19, XP068098394, [retrieved on 2015-09-16]
- TIM GODFREY ET AL.: "Integrated Long Range Low Power Operation for IoT", , 1 July 2015 (2015-07-01), pages 1-18, XP002773809, Retrieved from the Internet: URL:https://mentor.ieee.org/802.11/dcn/15/ 11-15-0775-01-0wng-integrated-long-range-l ow-power-operation.pptx [retrieved on 2017-09-15]
- SHIMI SHILO (HUAWEI): "11ax Support for IoT - Requirements and Technological Implications ; 11-15-1375-00-00ax-11ax-support-for-iot-re quirements-and-technological-implications" , IEEE DRAFT; 11-15-1375-00-00AX-11AX-SUPPORT-FOR-IOT-RE QUIREMENTS-AND-TECHNOLOGICAL-IMPLICATIONS, IEEE-SA MENTOR, PISCATAWAY, NJ USA, vol. 802.11ax, 9 November 2015 (2015-11-09), pages 1-24, XP068099364, [retrieved on 2015-11-09]

## Description

### BACKGROUND

The present invention, in some embodiments thereof, relates to Internet of Things (IOT) devices and, more specifically, but not exclusively, to communication methods of IOT devices.

Orthogonal Frequency Division Multiple Access (OFDMA) technology allows transmitting in a portion of the bandwidth. However, some transmission fields such as preamble and/or signal fields must be transmitted over the entire bandwidth in order to comply with existing wireless local area networks (LAN), i.e. IEEE 802.11 networks. Accordingly, devices in IEEE 802.11 networks must have the ability to receive transmissions and communicate in the full minimal bandwidth required by such network, which is usually 20 megahertz.

Shimi Shilo (HUAWEI): "11ax Support for IoT"; IEEE DRAFT 802.11-15/1134r2; September 2015 discusses Long Range Low Power (LRLP) operation for IoT devices.

### SUMMARY

The present invention is defined by an access point device for wireless communication according to independent claim 1 and a method for wireless communication according to independent claim 8.

Additional features of the invention are provided in the dependent claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of an exemplary 802.1 1ax standard transmission frame structure;
FIG. 2 is a schematic illustration of a modified transmission frame structure according to some embodiments of the present invention;
FIG. 3 is a schematic flowchart illustrating a method for wireless communication according to some embodiments of the present invention;
FIG. 4 is a schematic illustration of a wireless communication access point device 200 according to some embodiments of the present invention;
FIG. 5 is a schematic flowchart illustrating a method for communication by a low-band device in an OFDMA frame structure, according to some embodiments of the present invention;
FIG. 6 is a schematic illustration of logical components of an access point device according to some embodiments of the present invention;
FIG. 7 is a schematic illustration of a modified transmission frame structure according to some embodiments of the present invention;
FIG. 8 is a schematic illustration of a modified transmission frame structure according to some embodiments of the present invention;
FIG. 9 is a schematic illustration of a modified transmission frame structure according to some embodiments of the present invention;
FIG. 10 is a schematic illustration of an uplink OFDMA transmission frame structure according to some embodiments of the present invention;
FIG. 11 is a schematic illustration of a frame structure and of a required time of delay of transmission by a transmitter of a low-band device according to some embodiments of the present invention; and
FIG. 12 is a schematic illustration of an uplink frame structure according to some embodiments of the present invention.

### DETAILED DESCRIPTION

Devices that don't support the minimum bandwidth required in 802.11ax networks may be unable to communicate in such networks. For example, some embodiments of the present invention enable IOT clients to connect to OFDMA 802.1 1ax networks. Some IOT devices are expected to support smaller bandwidth than the minimum required in 802.11ax networks, and therefore are unable to receive mandatory full bandwidth transmission fields such as legacy preamble and/or signal fields. Since these fields are usually required for acquisition of the rest of the transmission, such devices may fail to connect to the network.

For example, a device that wishes to communicate in a 2 megahertz bandwidth still needs to employ radio-frequency (RF) capabilities of at least the required minimal bandwidth, for example 20 megahertz, in order to receive the mandatory full bandwidth transmission fields. Also, the current 802.11ax standard requires devices to transmit information on at least a minimal transmission bandwidth portion of 2 megahertz (26 tones, each occupies 78.125 kilohertz). Accordingly, in order to comply with the 802.11ax standard, a device must have the ability to communicate in a 20 megahertz bandwidth and cannot transmit information in a bandwidth portion smaller than 2 megahertz. For example, a standard device may transmit information on a 2 megahertz (but not smaller) portion of the bandwidth, while transmitting zero energy on the rest of the bandwidth, i.e. the rest 18 megahertz.

However, it may be desired to enable communication in lower bandwidths, for example in order to extend the transmission's range and\or to save energy. Throughout the present description, low-band devices are devices with a capability to communicate in smaller bandwidths than the minimal bandwidths required by wireless LAN standards, such as IOT devices. Full-bandwidth devices are legacy devices and High Efficiency (HE) devices, which are devices that support the minimal bandwidths required by wireless LAN standards.

Additionally, throughout the present description, low-band signals or transmissions are signals or transmissions transmitted in the smaller bandwidth supported by low-band devices. Full-bandwidth transmission frame structures or Legacy/HE transmission frame structures are transmission frame structures that include the mandatory full bandwidth transmission fields mentioned herein.

Some embodiments of the present invention provide a solution for enabling low-band devices to connect to a standard wireless network that supports full-bandwidth devices as well. The solution is provided by bypassing the necessity to detect the mandatory wide-band signals. Instead, the low-band devices use low-band signals inserted in dedicated locations in a full-bandwidth transmission frame structure for the purpose of signal acquisition by the low-band devices.

Accordingly, in some embodiments of the present invention an OFDMA transmission frame structure is modified in order to support low-band devices by adding dedicated acquisition signals, while maintaining the rest of the frame structure to support both full-bandwidth and low-band devices. In some embodiments, the modified frame structure includes a wake-up low-band signal for alerting wake-up receivers in low-band devices that a low-band transmission is arriving.

Therefore, some embodiments of the present invention provide a technical solution for supporting low-band devices in standard wireless networks, with minimal modification of the frame structure and without harming the connectivity of full-bandwidth devices by the modified frame structure. The solution is enabled by inserting minimal modifications to access-point transmitters and by receivers especially designed for low-band devices, without needing to modify full-bandwidth devices, and thus saving the costs of developing new and expensive equipment to support low-band devices in standard wireless networks.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

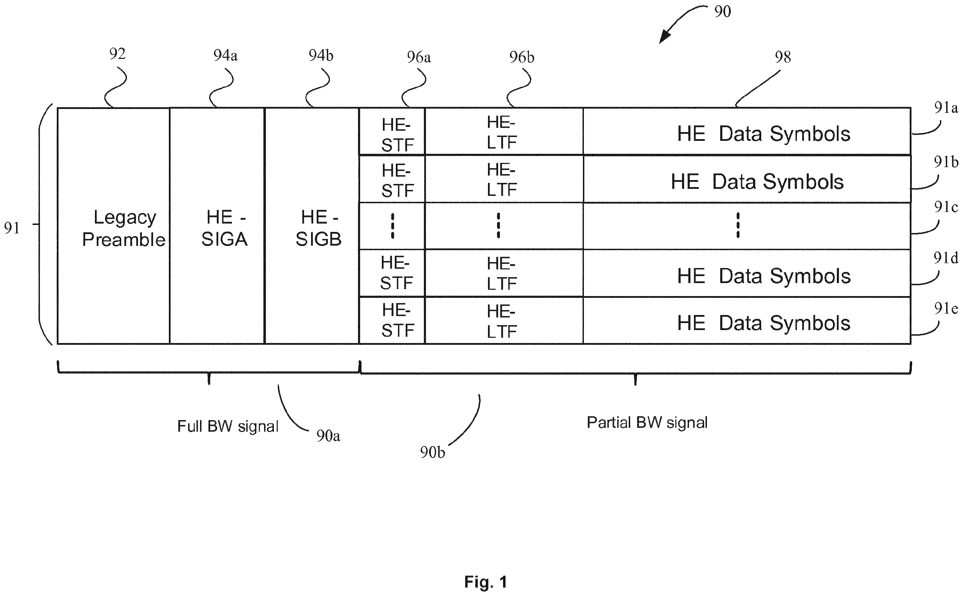

Reference is now made to FIG. 1, which is a schematic illustration of an exemplary 802.11ax standard transmission frame structure 90. Frame structure 90 includes mandatory full-band transmission fields 90a that occupy a full transmission bandwidth 91, for example in the beginning of the transmission, and partial band-width fields 90b in partial bandwidth channels 91a-91e, for example High Efficiency (HE) OFDMA channels.

Although FIG. 1 shows five partial bandwidth channels 91a-91e, the invention is not limited in this respect and any suitable number of bandwidth portions may be included. As indicated herein, a minimal full bandwidth 91 required by wireless LAN networks is of about 20 megahertz. Partial bandwidth fields 90b include, in each of partial bandwidth channels 91a-91e, partial bandwidth training fields 96a and 96b and a partial bandwidth data field 98. In each of partial bandwidth channels 91a-91e, training fields 96a and 96b provide information for training a receiver to receive a corresponding data field 98 of the same partial bandwidth channel, such as channel estimation, automatic gain control and/or any other suitable training information.

Full-band transmission fields 90a include a legacy preamble field 92 and signal fields 94a and 94b, for transmitting information needed for acquisition of following data signals by full-bandwidth devices, i.e. legacy or HE devices, such as data rate information, symbol lengths, demodulation instructions, and/or any other suitable signal information. In some cases an HE device in the wireless LAN network only needs to receive a low-band signal transmitted in a data symbol field 98 in one of partial bandwidth channels 91a-91e. However, as indicated herein, the device still must have the RF capability to receive the full bandwidth signal fields 94a and 94b in order to receive information needed for acquiring the low-band signal data symbols in data field 98.

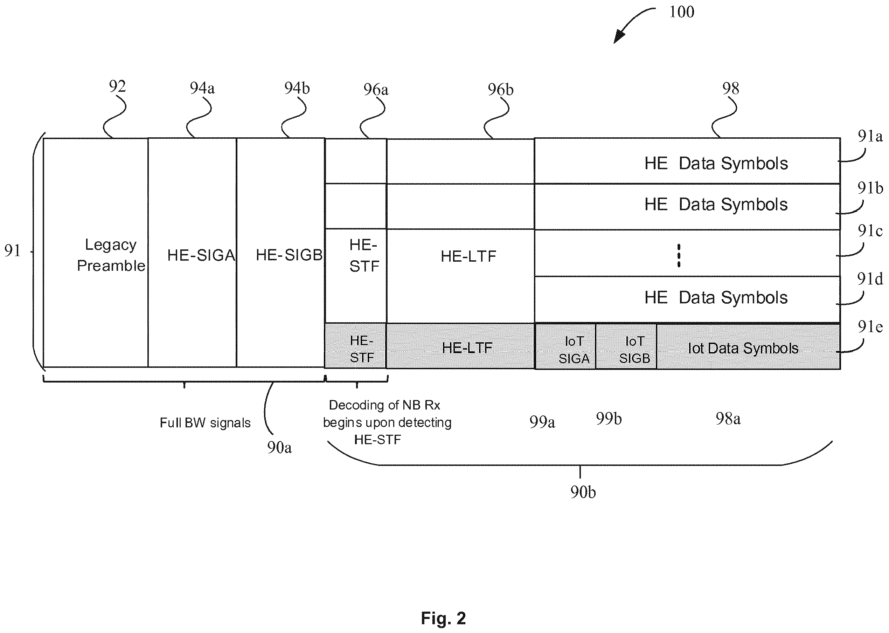

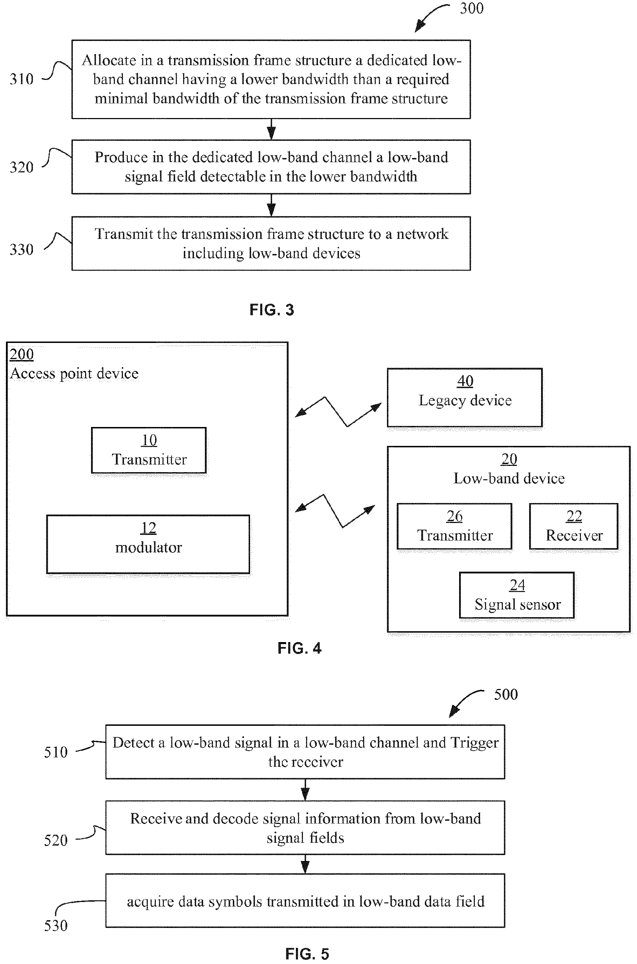

Reference is now made to FIG. 2, which is a schematic illustration of a modified transmission frame structure 100, according to some embodiments of the present invention. Reference is further made to FIG. 3, which is a schematic flowchart illustrating a method 300 for wireless communication according to some embodiments of the present invention, and to FIG. 4, which is a schematic illustration of a wireless communication access point device 200 according to some embodiments of the present invention.

Access point device 200 may include a transmitter 10 and a modulator 12, which may produce signals for transmission in an OFDMA wireless frame structure (WFS) and transmit the signals to various devices in a wireless network, including low-band devices 20 and full-bandwidth devices 40.

Low-band devices 20 may be communication devices limited to detection in a lower bandwidth than a required minimal bandwidth of an OFDMA WFS, as described in detail herein. A low band device 20 may include a receiver 22, configured to receive transmissions in a dedicated low-band channel, a signal sensor 24 and a transmitter 26.

Transmitter 10 may create a transmission having modified frame structure 100. For example, similarly to frame structure 90, modified frame structure 100 includes mandatory full-band transmission fields 90a that occupy a full transmission bandwidth 91, for example in the beginning of the transmission, and partial band-width fields 90b in partial bandwidth channels, for example channels 91a-91e. Each partial bandwidth channel may include partial bandwidth training fields 96a and 96b used, for example, for time/frequency estimation and/or channel estimation, and a partial bandwidth data symbol field 98. Therefore, the ability of legacy/HE devices to communicate in the wireless network is not harmed.

As indicated in block 310, transmitter 10 may allocate a dedicated low-band channel in an OFDMA WFS such as modified frame structure 100. For example, transmitter allocates partial bandwidth channel 91e to be a dedicated low-band channel for transmitting low-band signals to low-band devices 20. As mentioned herein, a low-band channel is a channel having a lower bandwidth than a required minimal bandwidth of the OFDMA-WFS.

For example, transmitter 10 allocates partial bandwidth channel 91e in parallel to at least one HE OFDMA channel such as partial bandwidth channels 91a-91d. For example, transmitter 10 allocates partial bandwidth channel 91e after a HE OFDMA full-band signal field occupying the required minimal bandwidth of the OFDMA-WFS, such as signal fields 94a and 94b.

As indicated in block 320, modulator 12 may produce in the allocated partial bandwidth channel 91e a low-band signal field detectable by signal sensor 24 in the lower bandwidth. For example, a partial bandwidth data field 98 in partial bandwidth channel 91e may be modified to include low-band signal fields 99a and 99b before a low-band data field 98a. Accordingly, modified transmission frame structure 100 includes in partial bandwidth channel 91e low-band signal fields 99a and 99b, for transmitting information needed in order to enable low-band devices 20 to acquire the following low band data signals in a low-band data field 98a.

For example, modulator 12 allocates a low-band signal field such as low-band signal fields 99a and 99b after a low-band training field such as partial bandwidth training fields 96a and 96b in low-band channel 91e. For example, modulator 12 produces the low-band training fields in parallel to HE OFDMA training fields 96a and 96b in other partial bandwidth channels 91a-91d. For example, modulator 12 produces the low-band training fields after at least one HE OFDMA full-band signal field occupying the minimal required bandwidth of the OFDMA-WFS, such as signal fields 94a and 94b.

As indicated in block 330, transmitter 10 may transmit the transmission frame structure to a network including low-band devices 20 and optionally legacy/HE devices 40. Low-band devices 20 may receive, decode, transmit and/or perform other communication operations in a similar manner as full-bandwidth devices 40, only operating on a narrower bandwidth, for example of about 2-4 megahertz.

Reference is now made to FIG. 5, which is a schematic flowchart illustrating a method 500 for communication by a low-band device 20 in a OFDMA frame structure, according to some embodiments of the present invention.

As indicated in block 510, signal sensor 24 may detect a low-band signal in low-band channel 91e and trigger receiver 22 to start receiving and decoding a transmission in low-band channel 91e. As indicated in block 520, receiver 22 may receive and decode signal information from low-band signal fields 99a and 99b. As indicated in block 530, based on the signal information, receiver 22 may acquire data symbols transmitted in low-band data field 98a.

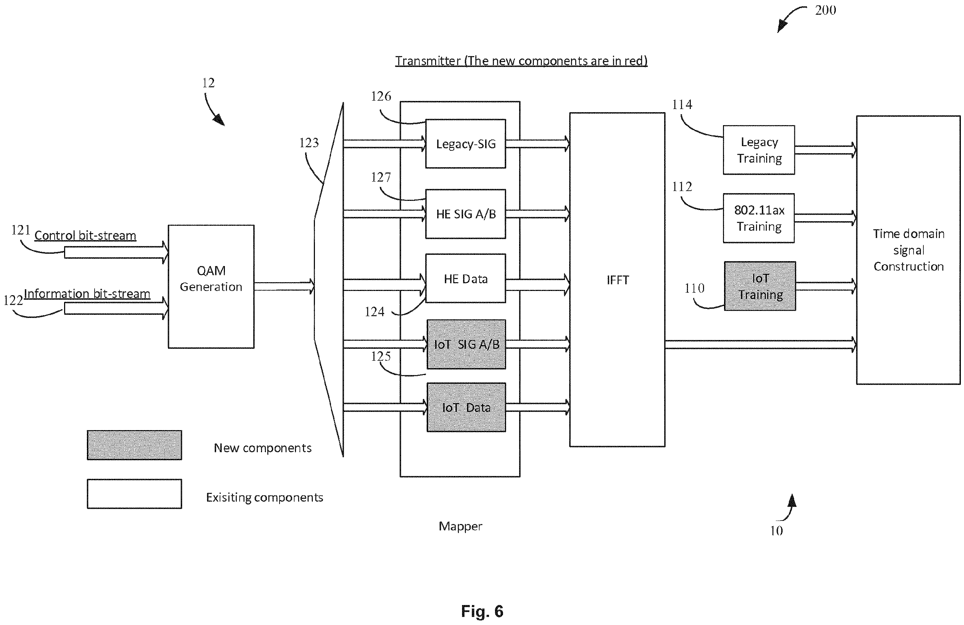

Reference is now made to FIG. 6, which is a schematic illustration of logical components of access point device 200 according to some embodiments of the present invention. Modulator 12 may receive control signals in a control bit-stream 121 and data stream in a data bit-stream 122 and generate a modulated stream composed of control bit-stream 121 and data bit-stream 122.

Modulator 12 may produce low-band signal data for transmission in fields 99a and 99b by de-multiplexing the received control signals, extracting low-band control data from the control signals, and mapping the low-band control data into dedicated low-band channel 91e. For example, modulator 12 may de-multiplex the modulated stream to extract low-band channel control data 124 designated for dedicated low-band channel 91e, and map the low-band channel control data 124 into the dedicated low-band channel 91e. HE OFDMA full-band control data 126 may be mapped into full-band fields 94a and/or 94b.

Similarly, modulator 12 may produce data symbols for transmission in field 98a in dedicated low-band channel 91e by de-multiplexing the received data stream, extracting low-band data symbols from the data stream, and mapping the low-band data symbols into dedicated low-band channel 91e. For example, modulator 12 may de-multiplex the modulated stream to extract low-band data symbols 125 designated for dedicated low-band channel 91e, and map the low-band data symbols 125 into the dedicated low-band channel 91e. HE OFDMA data symbols 127 may be mapped into data fields 98 in partial bandwidth channels 91a-91d.

The mapped low-band channel control data 124, HE OFDMA control data 126, low-band data symbols 125 and HE OFDMA data symbols 127 constitute a modulated frame structure in a frequency domain. After the mapping, access point device 200 may transform the modulated structure from the frequency domain to a time domain, for example by performing an inverse fast Fourier transform (IFFT), in order to construct a transmission frame structure in the time domain.

For example, transmitter 10 constructs the transmission frame structure in the time domain, by adding training signals in training fields, in order to facilitate receipt of the frame structure by receiving devices 20 and/or 40. For example, transmitter 10 adds legacy training signals 114 in a legacy training field 92 before the transformed modulated structure, HE OFDMA training signals 112 in HE OFDMA training fields 96a and 96b after full-band signal fields 94a and/or 94b, and/or low-band training signals 110 in training fields before low-band signal fields 99a and 99b, for example in training fields 96a and 96b of the dedicated low-band channel 91e or in dedicated low-band training fields described in more detail herein.

In order to receive the signal transmitted in allocated partial bandwidth channel 91e, a low-band device 20 may constantly scan potential received channels until a training field is detected by signal sensor 24 in one of the potential received channels, for example training field 96a is detected in partial bandwidth channel 91e. In such embodiments of the present invention, low-band device 20 may be connected to an electricity grid for continuous power supply, in order to enable the constant channel scanning. Once training field 96a is detected in partial bandwidth channel 91e, low-band device 20 may allow receiver 22 to continue receiving and/or decoding the transmission, including, for example, partial bandwidth training fields 96a and 96b, low-band signal fields 99a and 99b and low-band data field 98a.

In some embodiments of the present invention, signal information may be divided between low-band signal fields 99a and 99b. For example, low-band signal field 99a includes a Basic Service Set (BSS) color bit and/or an indication about a duration length of low-band signal field 99b, preparing receiver 22 to receive low-band signal field 99b. Low-band signal field 99b may include, for example, an indication of signal parameters of low-band data field 98a, target identification (ID) of the receiving low-band device 20, reduced modulation and coding scheme (MCS), transmission module, duration, and/or any other suitable signal information, which may enable a receiving low-band device 20 acquisition of signals in low-band data field 98a.

In some embodiments of the present invention, HE OFDMA full-band signal field 94b includes an indication that low-band signals for a low-band device 20 are included in a dedicated low-band channel 91e is included in transmission frame structure 100. The indication about low-band signals in dedicated low-band channel 91e prevents full-bandwidth devices 40 and/or low-band devices 20 from requesting information about the portion of the transmission bandwidth including dedicated channel 91e, for example from requesting for channel quality indicator (CQI), and/or from trying to receive and/or decode data from this channel.

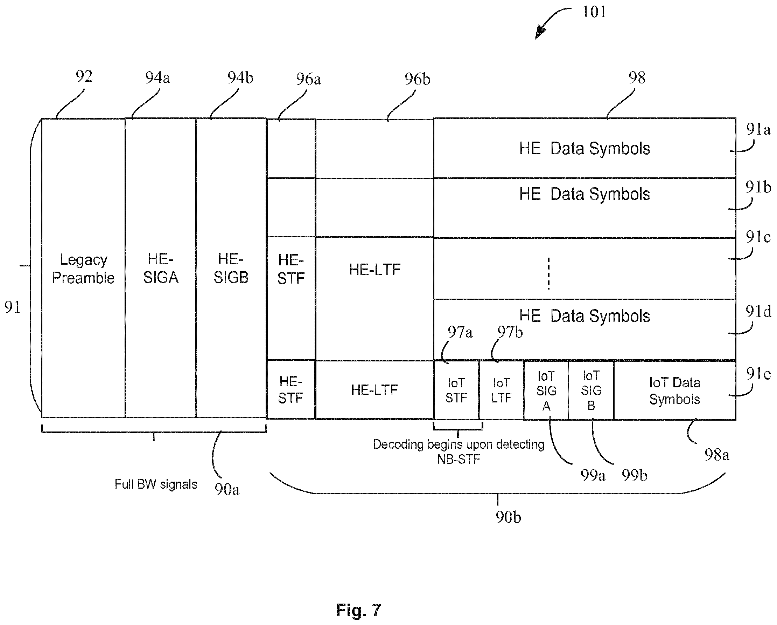

Other variations of modified transmission frame structures are provide by some embodiments of the present invention. Reference is now made to FIG. 7, which is a schematic illustration of a modified transmission frame structure 101, according to some embodiments of the present invention.

In transmission frame structure 101, modulator 12 produces in partial bandwidth channel 91e a dedicated low-band training field such as training fields 97a and 97b, in addition to and following training fields 96a and 96b. For example, modulator 12 produces and places low-band training fields 97a and 97b in parallel to data symbols in data fields 98 of channels 91a-91d.

For example, modulator 12 produces low-band training fields 97a and 97b after a HE OFDMA training field such as training fields 96a and 96b. Low-band device 20 may allow receiver 22 to continue receiving and/or decoding the transmission once training field 97a is detected in partial bandwidth channel 91e, e.g. only when channel 91e includes a dedicated low-band training fields 97a and 97b.

In some embodiments, low-band training field 97a may include a periodic signal used for time and/or frequency synchronization of receiver 22 of a receiving low-band device 20. Low-band training field 97b may include channel estimation data. A duration length of each of low-band training fields 97a and 97b may be equal and aligned with a duration length of a parallel HE OFDMA data symbol in a parallel data field 98 and thus, for example, orthogonality between two adjacent channels is maintained, as required in HE OFDMA frame structures.

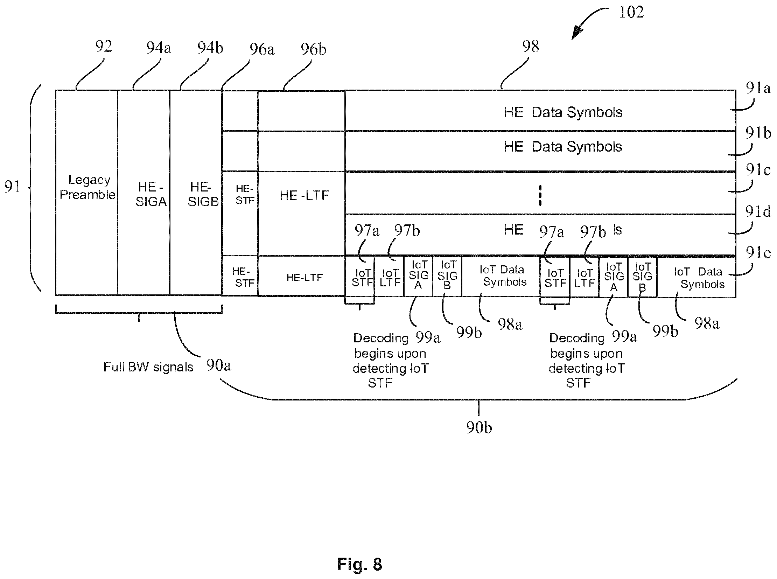

A similar structure is shown in FIG. 8, which is a schematic illustration of a modified transmission frame structure 102, according to some embodiments of the present invention. Frame structure 102 includes in dedicated partial bandwidth channel 91e cascading low-band transmissions, for example after training fields 96a and 96b and/or in parallel to data symbols in data fields 98 of channels 91a-91d. For example, cascading transmissions are used for transmitting data packets to multiple low-band devices. For example, each of the cascading transmission may be addressed to another low-and device 20.

Each of the low-band cascading transmissions includes low-band training fields 97a and 97b, low-band signal fields 99a and 99b and low-band data field 98a. When low-band device 20 detects training field 97a by signal sensor 24, the detection implies the beginning of a new transmission, and a receiving low-band device 20 may allow receiver 22 to continue receiving and/or decoding the transmission. In some embodiments, signal sensor 24 is included in receiver 22, allowing receiver 22 to continue the receiving once training field 97a is detected.

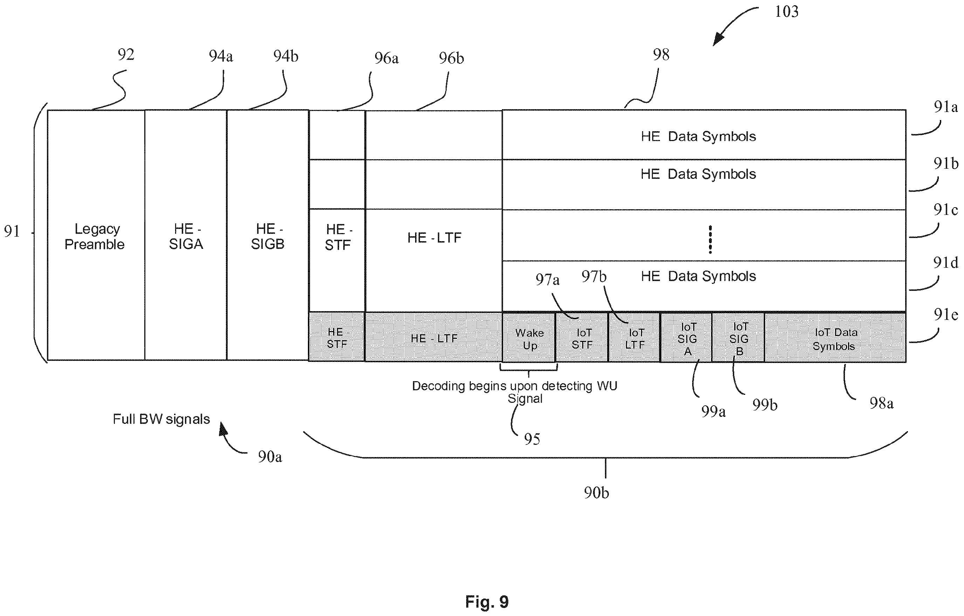

Reference is now made to FIG. 9, which is a schematic illustration of a modified transmission frame structure 103, according to the present invention. Modulator 12 produce a starter signal 95 for starting receiver 22 at a receiving low-band device 20, i.e. for triggering receiver 22 to start receiving and decoding the transmission.

Modulator 12 may locate starter signal 95 before low-band training fields 97a and 97b. For example, training fields 97a and 97b may be located a sufficient period of time after starter signal 95, enabling receiver 22 to start decoding operation after receiver 22 is triggered. Once the decoding starts, low-band device 20 may synchronize in time and/or frequency with transmitter 10 and obtain channel estimation by information decoded from training fields 97a and 97b. Such embodiments of the present invention may be energy and cost efficient, since receiver 22 is only active when starter signal 95 is detected by low-band device 20, for example by a signal sensor, and no constant scanning of the channel is required. Therefore, in such embodiments device 20 may be powered by a battery and connection to an electricity grid is not required.

In some embodiments of the present invention, frame structure 103 may include cascading low-band transmissions, for transmitting data packets to multiple low-band devices. Each of the low-band cascading transmissions may include a starter signal 95, low-band training fields 97a and 97b, low-band signal fields 99a and 99b and low-band data field 98a. When low-band device 20 detects starter signal 95, receiver 22 of a receiving low-band device 20 is triggered to start receiving and/or decoding the transmission.

In addition to the solution described above for enabling low-band device acquisition of signals from a HE OFDMA frame structure, some embodiments of the present invention provide a solution to enable low-band devices transmission of signals in HE OFDMA frame structure.

Low-band devices can transmit only low-band signals, and therefore cannot transmit, for example, legacy preamble and/or other full-band signals. In some embodiments of the present invention, low-band devices 20 overcome this problem by starting a transmission in a delay, in parallel to HE OFDMA partial-bandwidth signals.

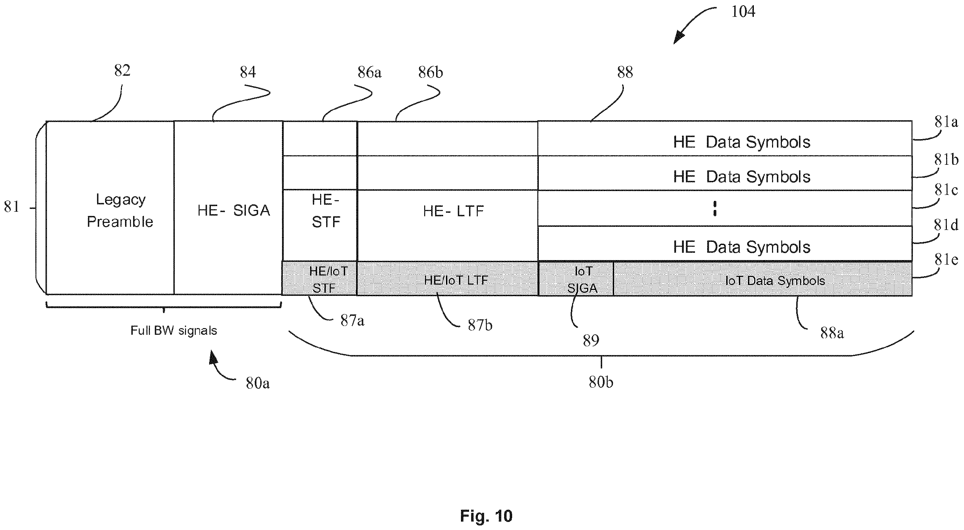

Reference is now made to FIG. 10, which is a schematic illustration of an uplink OFDMA transmission frame structure 104, i.e. a transmission from devices 40 and low-band devices 20 to access point device 200, according to some embodiments of the present invention.

For example frame structure 104 includes mandatory full-band transmission fields 80a that occupy a full transmission bandwidth 81 (that may be the same as bandwidth 91), for example in the beginning of the transmission, and partial band-width fields 80b in partial bandwidth channels, for example channels 81a-81e. Full-band transmission fields 81a may include a legacy preamble 82 and a full-band signal field 84. Each of partial bandwidth channels 81a-81d may include partial bandwidth HE OFDMA training fields 86a and 86b used, for example, for time/frequency estimation and/or channel estimation, and a partial bandwidth data symbol field 88. Therefore, the ability of full-bandwidth devices 40 to transmit in the wireless network is not harmed.

Transmitter 26 may allocate partial bandwidth channel 81e as a dedicated low-band channel for transmitting low-band signals from low-band devices 20. For example, transmitter 26 allocates dedicated low-band channel 81e after a HE OFDMA full-band signal field occupying the required minimal bandwidth of the OFDMA-WFS, such as signal field 84.

Dedicated low-band channel 81e may include training fields 87a and 87b in parallel to HE OFDMA training fields 86a and 86b, i.e. in the same frequency locations as fields 86a and 86b, respectively. Training fields 87a and 87b may be the same as HE OFDMA training fields 86a and 86b or different from HE OFDMA training fields 86a and 86b. After training fields 87a and 87b, dedicated low-band channel 81e may include a low-band signal field 89 and a low-band data symbol field 88a.

In order to by-pass the full-band fields 80a, transmitter 26 may start a transmission in a delay, in dedicated low-band channel 81e parallel to HE OFDMA partial-bandwidth fields 81a-81d. The delay of time is determined according to a duration length of full-band signal fields 80a. Therefore, the start time of the transmission by transmitter 26 depends on whether at least one full-bandwidth device 40 is also transmitting in the same uplink frame structure.

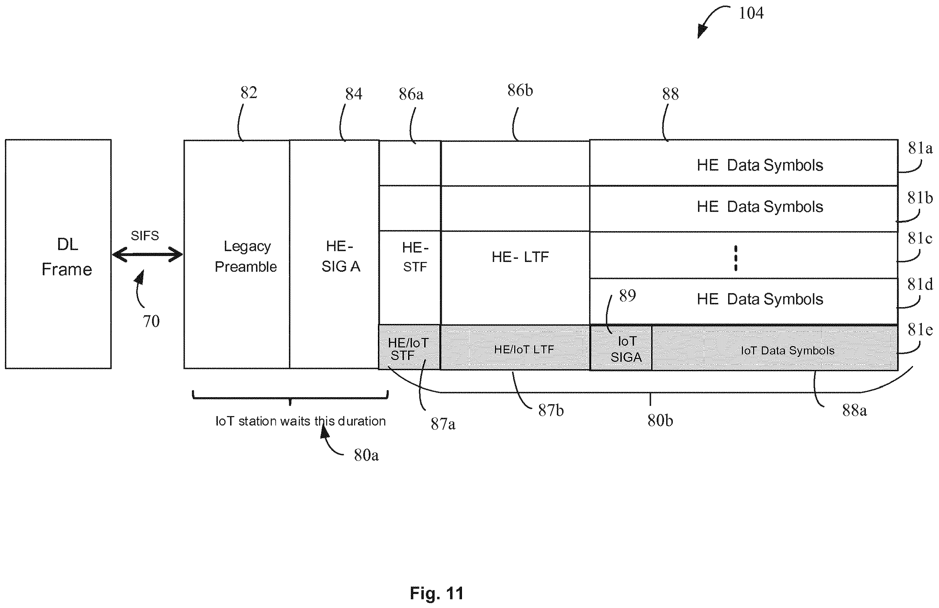

Reference is now made to FIG. 11, which is a schematic illustration of frame structure 104 and of the required time of delay of transmission by transmitter 26, according to some embodiments of the present invention. As shown in FIG. 11, since frame structure 104 includes both full bandwidth and low bandwidth transmissions, transmitter 26 starts to transmit in dedicated low-band channel 81e after waiting the duration length of full-band signal fields 80a, in addition to a Short Inter-frame Space (SIFS) duration length 70 after receiving a downlink frame. This way frame structure 104 keeps the HE OFDMA structure that enables full-bandwidth devices 40 to transmit in the wireless network.

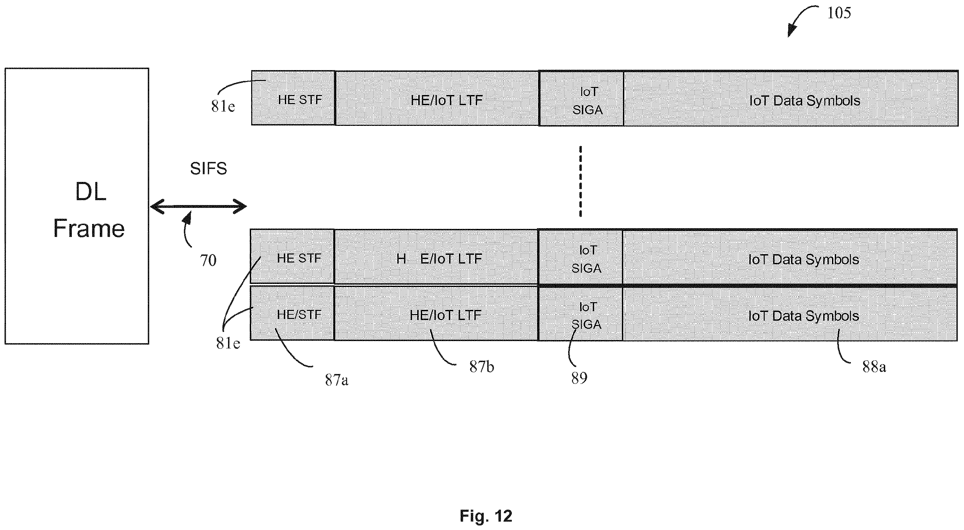

Reference is now made to FIG. 12, which is a schematic illustration of an uplink frame structure 105 according to some embodiments of the present invention. Frame structure 105 includes only low bandwidth transmissions in multiple low-band channels 81e, for example because no full-band device 40 is transmitting in this frame structure. Accordingly, transmitter 26 may start to transmit in dedicated low-band channels 81e without needing to wait after the SIFS duration length 70.

As used herein the term "about" refers to ± 10 %.

The terms "comprises", "comprising", "includes", "including", "having" and their conjugates mean "including but not limited to". This term encompasses the terms "consisting of" and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

In addition, citation or identification of any reference in this application shall not be construed as an admission that such reference is available as prior art to the present invention. To the extent that section headings are used, they should not be construed as necessarily limiting.

## Claims

1. An access point device for wireless communication comprising:
a transmitter (10) configured to allocate a dedicated low-band channel (91e), DLBC in a modified Orthogonal Frequency Division Multiple Access, OFDMA, wireless frame structure, OFDMA-WFS, the DLBC (91e) has a lower bandwidth than a minimal transmission bandwidth (91) of mandatory full bandwidth transmission fields required in an 802.11ax network; and
a modulator (12) configured to produce in the DLBC (91e) a low-band signal field (99a, 99b), LBSF, detectable in the lower bandwidth, for acquiring data symbols (98a) transmitted in the dedicated low-band channel (91e), wherein the LBSF (99a, 99b) is after at least one training field in the DLBC (91e), and the at least one training field is produced in parallel to a High Efficiency, HE, OFDMA data symbol in the modified OFDMA-WFS and after a HE OFDMA training field,
wherein the modulator (12) is further configured to produce a starter signal for starting a receiver at a receiving device and allocate the starter signal before the at least one produced training field, and
wherein the transmitter (10) is further configured to transmit the modified OFDMA-WFS.

2. The device of claim 1, wherein the DLBC (91e) is in parallel to at least one High Efficiency, HE, OFDMA channel and is after a HE OFDMA full-band signal field occupying the required minimal bandwidth (91) of the OFDMA-WFS.

3. The device of claim 1, wherein the modulator (12) is configured to produce cascading low-band transmissions in the DLBC (91e) in parallel to a HE OFDMA data symbol in the modified OFDMA-WFS, the cascading low-band transmissions comprises cascading signals for at least two low-band devices.

4. The device of claim 1, wherein the duration of the produced training field is aligned with the duration of the HE OFDMA data symbols.

5. The device of claim 2, wherein the HE OFDMA full-band signal field includes an indication about the low-band channel indicating that that low-band signals for a low-band device are included in a dedicated low-band channel is included in the modified OFDMA-WFS.

6. The device of claim 1 or 2, wherein the modulator (12) is configured to receive control signals and to produce the LBSF (99a, 99b) by de-multiplexing the control signals and extracting DLBC (91e) control data from the control signals into the DLBC (91e).

7. The device of claim 1 or 2, wherein the modulator (12) is configured to receive a data stream and to produce DLBC (91e) data symbols (98a) by de-multiplexing the data stream and extracting DLBC (91e) data from the data stream into the DLBC (91e).

8. A method for wireless communication comprising:
allocating (310) by a transmitter a DLBC (91e) in a modified OFDMA-WFS, the DLBC (91e) has a lower bandwidth than a minimal transmission bandwidth (91) of mandatory full bandwidth transmission fields required in an 802.1 1ax network; and
producing (320) by a modulator (12) in the DLBC (91e) a LBSF (99a, 99b) detectable in said lower bandwidth, for acquiring data symbols (98a) transmitted in the DLBC (91e), wherein the LBSF (99a, 99b) is after a training field in the DLBC (91e), and the at least one training field is in parallel to a High Efficiency, HE, OFDMA data symbol in the modified OFDMA-WFS and after a HE OFDMA training field,
producing, by the modulator, a starter signal for starting a receiver at a receiving device and allocate the starter signal before the at least one produced training field; and transmitting (330) the modified OFDMA-WFS.

9. The method according to claim 8, wherein the DLBC (91e) is in parallel to at least one High Efficiency, HE, OFDMA channel and after a HE OFDMA full-band signal field occupying the required minimal bandwidth (91) of the OFDMA-WFS.

10. The method according to claim 8, the method further comprises: producing cascading low-band transmissions in the DLBC (91e) in parallel to a HE OFDMA data symbol in the modified OFDMA-WFS, the cascading low-band transmissions comprises cascading signals for at least two low-band devices.

## Patentansprüche

1. Zugangspunktvorrichtung für drahtlose Kommunikation, umfassend:
einen Sender (10), konfiguriert zum Zuteilen eines dedizierten Niederbandkanals (91e), DLBC, in einer modifizierten Orthogonal-Frequenzmultiplex-Vielfachzugriff- bzw. OFDMA-Drahtlos-Frame-Struktur, OFDMA-WFS, wobei der DLBC (91e) eine geringere Bandbreite als eine minimale Übertragungsbandbreite (91) der obligatorischen Übertragungsfelder voller Bandbreite aufweist, die in einem 802.11ax-Netzwerk erforderlich sind; und
einen Modulator (12), konfiguriert zum Produzieren, in dem DLBC (91e), eines Niederband-Signalfelds (99a, 99b), LBSF, das in der niederen Bandbreite detektierbar ist, zum Erfassen von Datensymbolen (98a), die in dem dedizierten Niederbandkanal (91e) übertragen werden, wobei das LBSF (99a, 99b) nach mindestens einem Trainingsfeld in dem DLBC (91e) ist und das mindestens eine Trainingsfeld parallel mit einem Hocheffizienz- bzw. HE-OFDMA-Datensymbol in der modifizierten OFDMA-WFS und nach einem HE-OFDMA-Trainingsfeld produziert wird,
wobei der Modulator (12) ferner konfiguriert ist zum Produzieren eines Startsignals zum Starten eines Empfängers an einer Empfangsvorrichtung und Zuteilen des Startsignals vor dem mindestens einen produzierten Trainingsfeld und
wobei der Sender (10) ferner konfiguriert ist zum Übertragen des modifizierten OFDMA-WFS.

2. Vorrichtung nach Anspruch 1, wobei der DLBC (91e) parallel zu mindestens einem Hocheffizienz- bzw. HE-OFDMA-Kanal ist und nach einem HE-OFDMA-Vollband-Signalfeld, das die erforderliche minimale Bandbreite (91) der OFDMA-WFS belegt, ist.

3. Vorrichtung nach Anspruch 1, wobei der Modulator (12) konfiguriert ist zum Produzieren von kaskadierenden Niederband-Übertragungen in dem DLBC (91e) parallel zu einem HE-OFDMA-Datensymbol in der modifizierten OFDMA-WFS, wobei die kaskadierenden Niederband-Übertragungen kaskadierende Signale für mindestens zwei Niederbandvorrichtungen umfassen.

4. Vorrichtung nach Anspruch 1, wobei die Dauer des produzierten Trainingsfelds mit der Dauer des HE-OFDMA-Datensymbols ausgerichtet ist.

5. Vorrichtung nach Anspruch 2, wobei das HE-OFDMA-Vollband-Signalfeld eine Angabe über den Niederbandkanal enthält, die angibt, dass die Niederbandsignale für eine Niederbandvorrichtung in einem dedizierten Niederbandkanal enthalten sind, der in der modifizierten OFDMA-WFS enthalten ist.

6. Vorrichtung nach Anspruch 1 oder 2, wobei der Modulator (12) konfiguriert ist zum Empfangen von Steuerungssignalen und zum Produzieren des LBSF (99a, 99b) durch Entmultiplexen der Steuerungssignale und Extrahieren von Steuerdaten des DLBC (91e) aus den Steuerungssignalen in den DLBC (91e).

7. Vorrichtung nach Anspruch 1 oder 2, wobei der Modulator (12) konfiguriert ist zum Empfangen eines Datenstroms und zum Produzieren von Datensymbolen (98a) des DLBC (9le) durch Entmultiplexen des Datenstroms und Extrahieren von Daten des DLBC (91e) aus dem Datenstrom in den DLBC (91e).

8. Verfahren für drahtlose Kommunikation, umfassend:
Zuteilen (310), durch einen Sender, eines DLBC (91e) in einer modifizierten OFDMA-WFS, wobei der DLBC (91e) eine geringere Bandbreite als eine minimale Übertragungsbandbreite (91) der obligatorischen Übertragungsfelder voller Bandbreite, die in einem 802.11ax-Netzwerk erforderlich sind, aufweist; und
Produzieren (320), durch einen Modulator (12) in dem DLBC (91e), eines LBSF (99a, 99b), das in der niederen Bandbreite detektierbar ist, zum Erfassen von Datensymbolen (98a), die in dem DLBC (91e) übertragen werden, wobei das LBSF (99a, 99b) nach einem Trainingsfeld in dem DLBC (91e) ist und das mindestens eine Trainingsfeld parallel mit einem Hocheffizienz- bzw. HE-OFDMA-Datensymbol in der modifizierten OFDMA-WFS und nach einem HE-OFDMA-Trainingsfeld ist, Produzieren, durch den Modulator, eines Startsignals zum Starten eines Empfängers an einer Empfangsvorrichtung und Zuteilen des Startsignals vor dem mindestens einen produzierten Trainingsfeld; und
Übertragen (330) der modifizierten OFDMA-WFS.

9. Verfahren nach Anspruch 8, wobei der DLBC (91e) parallel zu mindestens einem Hocheffizienz- bzw. HE-OFDMA-Kanal und nach einem HE-OFDMA-Vollband-Signalfeld, das die erforderliche minimale Bandbreite (91) der OFDMA-WFS belegt, ist.

10. Verfahren nach Anspruch 8, wobei das Verfahren ferner umfasst: Produzieren von kaskadierenden Niederband-Übertragungen in dem DLBC (91e) parallel zu einem HE-OFDMA-Datensymbol in der modifizierten OFDMA-WFS, wobei die kaskadierenden Niederband-Übertragungen kaskadierende Signale für mindestens zwei Niederbandvorrichtungen umfassen.

## Revendications

1. Dispositif de point d'accès pour la communication sans fil comprenant :
un émetteur (10) configuré pour allouer un canal en bande basse dédié (91e), DLBC, dans une structure de trame sans fil à accès multiple par répartition en fréquences orthogonales, OFDMA, OFDMA-WFS, modifiée, le DLBC (91e) ayant une largeur de bande inférieure à une largeur de bande de transmission minimale (91) de champs de transmission à pleine largeur de bande obligatoires requis dans un réseau 802.11ax ; et
un modulateur (12) configuré pour produire dans le DLBC (91e) un champ de signal en bande basse (99a, 99b), LBSF, détectable dans la bande passante inférieure, pour acquérir des symboles de données (98a) transmis dans le canal en bande basse dédié (91e), dans lequel le LBSF (99a, 99b) se situe après au moins un champ d'entraînement dans le DLBC (91e), et l'au moins un champ d'entraînement est produit parallèlement à un symbole de données OFDMA haute efficacité, HE, dans la OFDMA-WFS modifiée et après un champ d'entraînement HE OFDMA,
dans lequel le modulateur (12) est en outre configuré pour produire un signal de démarrage pour démarrer un récepteur au niveau d'un dispositif de réception et allouer le signal de démarrage avant l'au moins un champ d'entraînement produit, et
dans lequel l'émetteur (10) est en outre configuré pour transmettre la OFDMA-WFS modifiée.

2. Dispositif selon la revendication 1, dans lequel le DLBC (91e) est parallèle à au moins un canal OFDMA haute efficacité, HE, et se situe après un champ de signal pleine bande HE OFDMA occupant la largeur de bande minimale (91) requise de l'OFDMA-WFS.

3. Dispositif selon la revendication 1, dans lequel le modulateur (12) est configuré pour produire des transmissions en cascade en bande basse dans le DLBC (91e) parallèlement à un symbole de données HE OFDMA dans la OFDMA-WFS modifiée, les transmissions en cascade en bande basse comprenant des signaux en cascade pour au moins deux dispositifs en bande basse.

4. Dispositif selon la revendication 1, dans lequel la durée du champ d'entraînement produit est alignée avec la durée des symboles de données HE OFDMA.

5. Dispositif selon la revendication 2, dans lequel le champ de signal pleine bande HE OFDMA comprend une indication sur le canal en bande basse indiquant que les signaux en bande basse pour un dispositif en bande basse sont inclus dans un canal en bande basse dédié qui est inclus dans l'OFDMA-WFS modifiée.

6. Dispositif selon la revendication 1 ou 2, dans lequel le modulateur (12) est configuré pour recevoir des signaux de commande et pour produire le LBSF (99a, 99b) en démultiplexant les signaux de commande et en extrayant des données de commande DLBC (91e) des signaux de commande dans le DLBC (91e).

7. Dispositif selon la revendication 1 ou 2, dans lequel le modulateur (12) est configuré pour recevoir un flux de données et pour produire des symboles de données DLBC (91e) (98a) en démultiplexant le flux de données et en extrayant des données DLBC (91e) du flux de données dans le DLBC (91e).

8. Procédé de communication sans fil comprenant les étapes suivantes :
allouer (310), par un émetteur, un DLBC (91e) dans une OFDMA-WFS modifiée, le DLBC (91e) ayant une largeur de bande inférieure à une largeur de bande de transmission minimale (91) de champs de transmission à pleine largeur de bande obligatoires requis dans un réseau 802.11ax ; et
produire (320), par un modulateur (12), dans le DLBC (91e), un LBSF (99a, 99b) détectable dans ladite bande passante inférieure, pour acquérir des symboles de données (98a) transmis dans le DLBC (91e), dans lequel le LBSF (99a, 99b) se situe après un champ d'entraînement dans le DLBC (91e), et l'au moins un champ d'entraînement est parallèle à un symbole de données OFDMA haute efficacité, HE,
dans la OFDMA-WFS modifiée et après un champ d'entraînement HE OFDMA, produire, par le modulateur, un signal de démarrage pour démarrer un récepteur au niveau d'un dispositif de réception et allouer le signal de démarrage avant l'au moins un champ d'entraînement produit ; et
transmettre (330) la OFDMA-WFS modifiée.

9. Procédé selon la revendication 8, dans lequel le DLBC (91e) est parallèle à au moins un canal OFDMA haute efficacité, HE, et se situe après un champ de signal pleine bande HE OFDMA occupant la largeur de bande minimale (91) requise de la OFDMA-WFS.

10. Procédé selon la revendication 8, le procédé comprenant en outre l'étape suivante :
produire des transmissions en cascade en bande basse dans le DLBC (91e) parallèlement à un symbole de données HE OFDMA dans la OFDMA-WFS modifiée, les transmissions en cascade en bande basse comprenant des signaux en cascade pour au moins deux dispositifs en bande basse.
